# EUROPÄISCHE PATENTSCHRIFT

(11) **EP 1 892 443 B1**
(45) Veröffentlichungstag und Bekanntmachung des Hinweises auf die Patenterteilung: **06.06.2012**
(21) Anmeldenummer: 06017815.9
(22) Anmeldetag: 25.08.2006
(51) Int. Cl.: F16J 15/32

(54) **Bürstendichtung**
Brush seal
Joint à brosses

(43) Veröffentlichungstag der Anmeldung: 27.02.2008
(73) Patentinhaber: SIEMENS AKTIENGESELLSCHAFT, 80333 München (DE)
(72) Erfinder: Huber, Norbert Dr., 91052 Erlangen (DE); Neef, Matthias Dr., 45468 Mülheim an der Ruhr (DE); Sürken, Norbert, 45468 Mülheim an der Ruhr (DE)

(56) Entgegenhaltungen:
- EP-A- 1 203 905
- EP-A- 1 331 423
- EP-A- 1 353 097
- DE-A- 19 720 649
- GB-A- 839 731

## Beschreibung

Die Erfindung betrifft eine Bürstendichtung, umfassend länglich ausgebildete an einem Stützring anliegende Borsten.

Um in rotierenden Strömungsmaschinen, wie beispielsweise bei Dampfturbinen, zwei verschiedene Druckräume abdichten zu können, werden Dichtelemente unterschiedlicher Bauart verwendet. Bekannt sind berührungslose Dichtungen, wie z.B. Labyrinthdichtungen, die zwischen Rotoren und stehenden Teilen eingesetzt werden. Außerdem sind berührende Dichtelemente bekannt, die allerdings während der Berührung nachgeben aufgrund der Verwendung von flexiblen Materialien.

Es ist bekannt, so genannte Bürstendichtungselemente einzusetzen, die zur Kategorie der berührenden Dichtelemente zugeordnet werden können. Bei den Bürstendichtungen wird ein Paket von Borsten zur Abdichtung zwischen Räumen unterschiedlichen Druckes verwendet. Bürstendichtungen werden zum Abdichten eines Hochdruckbereiches gegenüber einem Niederdruckbereich eingesetzt, wie es häufig bei Rotor-Stator-Anordnungen erforderlich ist. Die Borsten der Bürstendichtung erstrecken sich dabei im wesentlichen radial in einen ringförmigen Spalt zwischen Welle (Rotor) und Gehäuse (Stator) und dichten diesen ab, um das Strömen von Fluiden in einer axialen Richtung entlang der Welle zu hemmen.

Bürstendichtungen sind hierbei besonders tolerant gegen ein Unterschreiten des Radialspiels zwischen dem drehenden Bauteil und dem stehenden Bauteil. Die Borsten der Bürste geben bei einem Unterschreiten des Radialspiels und einem Anstreifen der Dichtung an der sich drehenden Welle nach, und es kommt zu einem Nachgeben der Borsten und zu einem Verschleiß an den Borsten, wenn der Kontakt zwischen den stehenden Borsten und dem drehenden Bauteil längere Zeit andauert. Daneben ist eine Bürste gut geeignet, eine Druckdifferenz aufzunehmen. Für die Überwindung größerer Druckdifferenzen werden Bürstendichtungen - ebenso wie Labyrinthdichtungen - eingesetzt.

Die Bürstendichtung selbst kann verschieden ausgestaltet sein. Die DE-OS-19 720 649, die DE-OS 39 07 614 und die DE 296 00 193 U1 beschreiben beispielsweise Bürstendichtungen, deren Borsten einen Kernring derart umschlingen, dass sie einseitig im wesentlichen radial von diesem vorstehen. Der Kernring und die um diesen angeordnete Borsten sind wiederum von einem Klemmring umschlossen, der verhindert, dass sich die Borsten von dem Kernring lösen.

Die DE 696 27 674 T2 beschreibt eine Bürstendichtung, deren Borsten zwischen zwei einander gegenüberliegenden Stützringen angeordnet sind, wobei die Borsten mittels Schweißen oder mit Hilfe von anderen dem Durchschnittsfachmann bekannten Mechanismen zwischen den Stützringen gehalten sind.

Im Betrieb wird bei Druckbeaufschlagung das Borstenpaket gegen einen hinteren Stützring gedrückt. Bürstendichtungen haben den Vorteil, dass die Borsten aufgrund der im Betrieb vorherrschenden Strömung im und um das Borstenpaket zur Welle gedrückt werden. Dadurch werden so genannte Kaltspalte geschlossen. Dieser Effekt ist unter dem Begriff Blow Down bekannt. Allerdings ist die Bewegung der Borsten in radialer Richtung aufgrund der Kompression in axialer Richtung behindert. Leckageströme zwischen den Bürsten und der Welle sind daher mit ansteigendem Druck höher, als wenn eine druckbelastete Bürstendichtung wieder entlastet wird (Hysterese-Effekt). Ansteigende und absteigende Druckentwicklungen sind im so genannten transienten Betrieb einer Strömungsmaschine vorhanden. Daher ist die Behinderung der freien Beweglichkeit der Borsten in radialer Richtung durch das Andrücken an den Stützring auch während eines transienten Betriebs nachteilig.

Wünschenswert wäre eine Bürstendichtung, die auch bei ansteigendem Druck eine verbesserte dichtende Wirkung zeigt bzw. eine eindeutige Abhängigkeit des Massenstroms von der anliegenden Druckdifferenz ohne Hysterese.

Es ist daher Aufgabe der Erfindung eine Bürstendichtung vorzustellen, deren dichtende Wirkung mit ansteigendem Druck verbessert wird.

Gelöst wird diese Aufgabe durch eine Bürstendichtung, umfassend länglich ausgebildete an einem Stützring anliegende Borsten, wobei zwischen den Borsten und dem Stützring ein reibarmes Material vorgesehen ist.

Bei ansteigendem Druck werden die Borsten gegen den Stützring gedrückt. Dadurch ist die Reibung zwischen den Borsten und dem Stützring groß, da die Reibungskraft in radialer Richtung von der Normalkraft abhängig ist. Je größer die Normalkraft umso größer ist die Reibungskraft. Die freie Beweglichkeit der Borsten in radialer Richtung wird durch die Normalkraft und den Reibungskoeffizienten der Borsten und dem Stützring beeinflusst. Wenn der Druck weiter ansteigt, verhindert die Reibkraft zwischen den Borsten und dem Stützring eine weitere radiale Bewegung der Borsten. Die Folge ist, dass ein Leckage-Massenstrom vergleichsweise hoch ist.

Ein anderer Effekt tritt auf, wenn der Druck geringer wird. Denn in diesem Fall wird die Reibungskraft zwischen den Borsten und dem Stützring geringer. Dadurch ist es für die Borsten möglich eine radiale Bewegung auszuführen, da die Normalkraft auf den Stützring geringer wird. Durch den erfindungsgemäßen Einsatz eines reibarmen Materials zwischen Borsten und dem Stützring werden die Reibkräfte entscheidend verringert. Das bedeutet, dass bei ansteigendem Druck die Borsten eine bessere freie radiale Beweglichkeit aufweisen, da die Reibkraft zwischen den Borsten und dem Stützring geringer ist. Dies führt dazu, dass die Leckageströme bei aufsteigendem mit den Leckageströmen bei absteigendem Druck vergleichbar sind.

Dadurch entsteht der Vorteil, dass der Wirkungsgrad der gesamten Strömungsmaschine erhöht wird, indem die Vorhersagbarkeit eines eindeutigen Dichteverhaltens verbessert wird und indem die Fähigkeit der Bürste zur Adaption an geänderte Betriebszustände und Rotorbewegungen verbessert wird.

Vorteilhafte Weiterbildungen werden in den Unteransprüchen beschrieben.

So ist es vorteilhaft, wenn der Reibungskoeffizient des reibarmen Materials niedriger ist als der Reibungskoeffizient der Borsten und/oder des Stützringes. Um die vorteilhafte Wirkung der erfindungsgemäßen Bürstendichtung zu erzielen, ist es erforderlich, dass das reibarme Material einen niedrigeren Reibungskoeffizienten aufweist als der Reibungskoeffizient der Borsten. Nahezu der gleiche Effekt wird erzielt, wenn statt der Borsten der Stützring das reibarme Material mit dem niedrigeren Reibungskoeffizienten aufweist. Ebenso ist es vorteilhaft, wenn sowohl die Borsten als auch der Stützring mit dem reibarmen Material ausgebildet ist. Durch diese Maßnahmen lassen sich die Herstellungskosten besser kalkulieren, da Alternativen angeboten werden, wie der erfindungsgemäße Vorteil erzielt werden kann.

In einer vorteilhaften Weiterbildung wird im Wesentlichen der Gesamtstützring aus dem reibarmen Material gefertigt. Dadurch ist es möglich, geringe Herstellungskosten zu erzielen, da die Bearbeitungszeit vergleichsweise kurz ist, wenn der gesamte Stützring aus einem einzigen Material gefertigt wird.

In einer weiteren vorteilhaften Weiterbildung ist das reibarme Material als Schicht ausgebildet. Dadurch erzielt man den Vorteil, dass die Kosten für die Herstellung der Bürstendichtung vergleichsweise gering ausfallen.

Vorteilhafterweise ist das reibarme Material ein Teflon.

In vorteilhaften Weiterbildungen kann als reibarmes Material eine Keramik oder ein graphithaltiges Material verwendet werden.

Nachfolgend werden verschiedene Ausgestaltungen der Erfindung unter Bezugnahme auf die beiliegende Zeichnung genauer beschrieben. Es zeigen:
- FIG 1: eine Querschnittsansicht einer Bürstendichtung gemäß dem Stand der Technik,
- FIG 2: eine alternative Ausführungsform einer Bürstendichtung gemäß dem Stand der Technik,
- FIG 3: ein Ausschnitt einer erfindungsgemäßen Bürstendichtung,
- FIG 4: Darstellung der Leckageströmung während unterschiedlicher Druckverhältnisse bei einer zum Stand der Technik gehörenden Bürstendichtung,
- FIG 5: Darstellung der Leckageströmung während unterschiedlicher Druckverhältnisse bei einer erfindungsgemäßen Bürstendichtung.

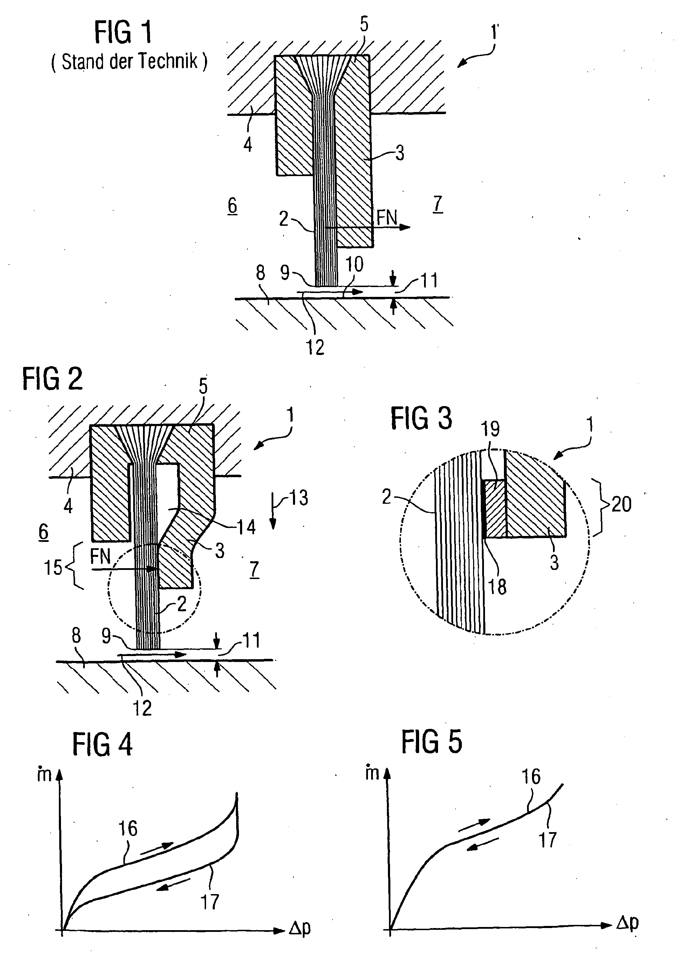

In der FIG 1 ist eine Bürstendichtung 1 dargestellt, die derzeit gemäß dem Stand der Technik verwendet wird. Die Bürstendichtung 1 umfasst länglich ausgebildete Borsten 2, die an einem Stützring 3 anliegen. Die Borsten 2 werden an einem Bauteil einer Strömungsmaschine fest gehaltert. Das Bauteil 4 kann ein Gehäuse einer Dampfturbine sein. Es sind verschiedene Maßnahmen bekannt, um die Borsten und den Stützring an das Bauteil 4 anzubringen. So ist es bekannt, beispielsweise die Bürstendichtung 1 in eine Nut im Bauteil 4 einzuklemmen, einzustemmen oder einzuschweißen.

Die Bürstendichtung 1 wird zum Abdichten eines Hochdruckbereiches 6 und eines Niederdruckbereiches 7 eingesetzt. Die Bürstendichtung 1 dichtet vorwiegend einen Spalt 11 zwischen dem Bauteil 4 und einem zweiten Bauteil 8 ab. Das zweite Bauteil 8 kann beispielsweise eine Welle (Rotor) sein. Zwischen der Spitze 9 der Borsten 2 und der gegenüberliegenden Oberfläche 10 des zweiten Bauteils 8 ist in der Regel ein Spalt 11 gebildet. Je geringer dieser Spalt 11 ausgebildet ist, umso geringer ist ein Leckagestrom 12 ausgebildet.

In der FIG 2 ist eine alternative Ausführungsform einer Bürstendichtung 1 gemäß dem Stand der Technik dargestellt. Der Unterschied der in der FIG 2 dargestellten Bürstendichtung 1 zu der in FIG 1 dargestellten Bürstendichtung 1 ist, dass der Stützring in radialer Richtung 13 gebogen ausgeführt ist. Durch diese gebogene Ausführung des Stützrings 5 entsteht ein Freiraum 14 zwischen dem Stützring 5 und den Borsten 2. Durch die Biegung verringert sich eine Anlagefläche 15 des Stützrings 5 auf die Borsten 2.

Mit ansteigendem Druck im Hochdruckbereich 6 vergrößert sich eine Normalkraft Fn der Borsten 2 auf den Stützring 3. Dadurch wird eine Bewegung der Borsten 2 in der Richtung 13 gehemmt, da die Reibung zwischen den Borsten und dem Stützring 3 infolge einer erhöhten Reibung vergrößert wird. Dies führt dazu, dass der Spalt 11 sich nicht oder verzögert wegen des so genannten Blow-Down-Effektes verringert.

Sobald jedoch der Druck im Hochdruckbereich 6 wieder abnimmt, verringert sich die Normalkraft Fn auf den Stützring 3, was dazu führt, dass die Reibkräfte zwischen der Borstendichtung 1 und dem Stützring 3 nachlassen. Eine Bewegung der Borsten 2 in radialer Richtung 13 ist daher gegeben. Dies führt dazu, dass der radiale Spalt 11 sich verringern kann. Dies hat den Effekt, dass der Leckagestrom 12 geringer wird.

In der FIG 4 ist dieser so genannte Hysterese-Effekt anhand einer Kurve dargestellt. Auf der y-Achse ist der Leckagestrom 12 (m) für eine zum Stand der Technik gehörende Bürstendichtung (1) dargestellt. Auf der x-Achse ist der Druckunterschied zwischen dem Hochdruckbereich 6 und dem Niederdruckbereich 7 (Δp) dargestellt. Die Kurve 16 stellt den Massestrom bei ansteigendem Druck dar. Wohingegen die Kurve 17 den Massenstrom bei absteigendem Druck darstellt. Aus dieser Grafik ist zu erkennen, dass der Leckagestrom bei aufsteigendem Druck (Kurve 16) höher ist als der Leckagestrom ab absteigendem Druck (Kurve 17).

In der FIG 5 ist der Verlauf des Leckagestroms 12 (m) für eine erfindungsgemäße Bürstendichtung (1) dargestellt. Man erkennt, dass kein Hysterese-Effekt mehr auftaucht und die Kurven 16 und 17 zu einer gemeinsamen Kurve zusammenfallen.

In der FIG 3 ist ein Teil einer Bürstendichtung 1 gemäß dem Stand der Technik dargestellt. Zwischen den Borsten 2 und dem Stützring 3 ist ein reibarmes Material 19 vorgesehen. Das reibarme Material 19 kann über die gesamte Länge der Borsten 2 angeordnet sein. Es ist auch möglich, das reibarme Material 19 nur über einen Bereich 20 aufzubringen. Das reibarme Material 19 sollte einen Reibungskoeffizienten aufweisen, der niedriger ist als der Reibungskoeffizient der Borsten 2 und/oder des Stützrings 3. Zwischen dem reibarmen Material 19 und den Borsten entsteht eine Anlagefläche 18.

In erfindungsgemäßen Ausführungsformen wird das reibarme Material 19 auf den Borsten 2 aufgebracht werden.

In einer weiteren alternativen Ausführungsform kann sogar der gesamte Stützring 3 aus dem reibarmen Material 19 ausgebildet sein.

Es ist ebenso denkbar, das reibarme Material 19 lediglich als Schicht auszubilden.

Als reibarmes Material 19 kann beispielsweise Teflon (Tetrafluorethylen), eine Keramik oder ein graphithaltiges Material verwendet werden. Es können ebenso auch Buntmetalle oder andere weiche Metalle verwendet werden.

## Patentansprüche

1. Bürstendichtung (1),
umfassend Borsten (2) und einen Stützring (3, 5),
wobei zwischen den Borsten (2) und dem Stützring (3, 5) ein reibarmes Material (19) vorgesehen ist,
wobei der Stützring in einer radialen Richtung (13) gebogen ausgeführt ist,
**dadurch gekennzeichnet, dass**
die Borsten (2) in der radialen Richtung (13) länglich ausgebildet sind und an dem Stützring (3, 5) anliegen und das reibarme Material (19) auf den Borsten (2) ausgebildet ist.

2. Bürstendichtung (1) nach Anspruch 1,
wobei der Reibungskoeffizient des reibarmen Materials (19) niedriger ist als der Reibungskoeffizient der Borsten (2) und/oder des Stützringes (3, 5).

3. Bürstendichtung (1) nach Anspruch 1 oder 2,
wobei das reibarme Material (19) auf dem Stützring (3, 5) ausgebildet ist.

4. Bürstendichtung (1) nach Anspruch 1 oder 2,
wobei der Stützring (3, 5) im Wesentlichen aus dem reibarmen Material (19) gefertigt ist.

5. Bürstendichtung (1) nach einem der Ansprüche 1 bis 4,
wobei das reibarme Material (19) als Schicht aufgebildet ist.

6. Bürstendichtung (1) nach einem der vorhergehenden Ansprüche,
wobei das reibarme Material (19) Teflon ist.

7. Bürstendichtung (1) nach einem der Ansprüche 1 bis 5,
wobei das reibarme Material (19) eine Keramik ist.

8. Bürstendichtung (1) nach einem der Ansprüche 1 bis 5,
wobei das reibarme Material (19) graphithaltig ist.

9. Bürstendichtung (1) nach einem der Ansprüche 1 bis 5,
wobei das reibarme Material (19) ein Buntmaterial oder ein weiches Material ist.

## Claims

1. Brush seal (1)
comprising bristles (2) and a supporting ring (3, 5),
wherein a low-friction material (19) is provided between the bristles (2) and the supporting ring (3, 5),
wherein the supporting ring is formed so as to bend in a radial direction (13),
**characterized in that**
the bristles (2) have an elongate form in the radial direction (13) and rest against the supporting ring (3, 5), and the low-friction material (19) is formed on the bristles (2).

2. Brush seal (1) according to Claim 1,
wherein the coefficient of friction of the low-friction material (19) is lower than the coefficient of friction of the bristles (2) and/or of the supporting ring (3, 5).

3. Brush seal (1) according to Claim 1 or 2,
wherein the low-friction material (19) is formed on the supporting ring (3, 5).

4. Brush seal (1) according to Claim 1 or 2,
wherein the supporting ring (3, 5) is manufactured substantially from the low-friction material (19).

5. Brush seal (1) according to one of Claims 1 to 4,
wherein the low-friction material (19) is in the form of a layer.

6. Brush seal (1) according to one of the preceding claims,
wherein the low-friction material (19) is Teflon.

7. Brush seal (1) according to one of Claims 1 to 5,
wherein the low-friction material (19) is a ceramic.

8. Brush seal (1) according to one of Claims 1 to 5,
wherein the low-friction material (19) contains graphite.

9. Brush seal (1) according to one of Claims 1 to 5,
wherein the low-friction material (19) is a nonferrous material or a soft material.

## Revendications

1. Joint ( 1 ) à brosses,
comprenant des soies ( 2 ) et un anneau ( 3, 5 ) d'appui, dans lequel un matériau ( 19 ) à faible frottement est prévu entre les soies ( 2 ) et l'anneau ( 3, 5 ) d'appui,
dans lequel l'anneau d'appui est réalisé courbé dans une direction ( 13 ) radiale,
**caractérisé en ce que**
les soies (2) sont oblongues dans la direction ( 13 ) radiale et s'appliquent à l'anneau ( 3, 5 ) d'appui et le matériau ( 19 ) à faible frottement est constitué sur les soies ( 2 ).

2. Joint ( 1 ) à brosses suivant la revendication 1,
dans lequel le coefficient de frottement du matériau ( 19 ) à faible frottement est plus petit que le coefficient de frottement des soies ( 2 ) et/ou de l'anneau ( 3,5 ) d'appui.

3. Joint ( 1 ) à brosses suivant la revendication 1 ou 2,
dans lequel le matériau ( 19 ) à faible frottement est constitué sur l'anneau ( 3, 5 ) d'appui.

4. Joint ( 1 ) à brosses suivant la revendication 1 ou 2,
dans lequel l'anneau ( 3, 5 ) d'appui est essentiellement en le matériau ( 19 ) à faible frottement.

5. Joint ( 1 ) à brosses suivant l'une des revendications 1 à 4,
dans lequel le matériau ( 19 ) à faible frottement est constitué sous la forme d'une couche.

6. Joint ( 1 ) à brosses suivant l'une des revendications précédentes,
dans lequel le matériau ( 19 ) à faible frottement est du téflon.

7. Joint ( 1 ) à brosses suivant l'une des revendications 1 à 5,
dans lequel le matériau ( 19 ) à faible frottement est une céramique.

8. Joint ( 1 ) à brosses suivant l'une des revendications 1 à 5,
dans lequel le matériau ( 19 ) à faible frottement est graphitique.

9. Joint ( 1 ) à brosses suivant l'une des revendications 1 à 5,
dans lequel le matériau ( 19 ) à faible frottement est un matériau coloré ou un matériau tendre.
